# EUROPEAN PATENT SPECIFICATION

(11) **EP 0 715 954 B1**
(45) Date of publication and mention of the grant of the patent: **24.10.2001**
(21) Application number: 95119104.8
(22) Date of filing: 05.12.1995
(51) Int. Cl.: B32B 27/32

(54) **Laminated film of polyolefin resin**
Mehrschichtfolie aus Polyolefinharz
Film multicouche en polyoléfine

(30) Priority: 06.12.1994 JP 30183494
(43) Date of publication of application: 12.06.1996
(73) Proprietor: Sumitomo Chemical Company, Limited, Chuo-ku Osaka 541-8550 (JP)
(72) Inventor: Kotani, Kozo, Toyonaka-shi, Osaka-fu (JP); Sakaya, Taiichi, Takatsuki-shi, Osaka-fu (JP)
(74) Representative: VOSSIUS & PARTNER

(56) References cited:
- DATABASE WPI Derwent Publications Ltd., London, GB; AN 89-011143 [02] XP002007553 & JP-A-63 286 343 (MITSUBISHI KASEI VINYL) , 24 November 1988
- DATABASE WPI Derwent Publications Ltd., London, GB; AN 89-274981 [38] XP002007554 & JP-A-01 200 957 (MITSUBISHI KASEI VI) , 14 August 1989
- DATABASE WPI Derwent Publications Ltd., London, GB; AN 89-275793 [38] XP002007555 & JP-A-01 202 446 (MITSUBISHI KASEI VI) , 15 August 1989
- DATABASE WPI Derwent Publications Ltd., London, GB; AN 92-334994 [41] XP002007556 & JP-A-04 238 029 (MITSUBISHI KASEI VINYL KK) , 26 August 1992
- DATABASE WPI Derwent Publications Ltd., London, GB; AN 89-251805 [35] XP002007557 & JP-A-01 182 037 (NIPPON UNICAR KK) , 19 July 1989
- DATABASE WPI Derwent Publications Ltd., London, GB; AN 96-234729 [24] XP002007558 & JP-A-08 090 732 (CI KASEI CO LTD) , 9 April 1996

## Description

The present invention relates to a laminated film of polyolefin resin which is excellent in high frequency heat sealability and useful as an agricultural film.

Hitherto, as an agricultural covering film to be used as a material of a green house or a tunnel in facility horticulture and gardening, polyvinyl chloride film, a polyolefin resin film (e.g. polyethylene film), or an ethylene-vinyl acetate copolymer film is mainly used. In particular, the polyvinyl chloride film is widely used as a covering in Japan.

A purpose of the facility horticulture is to enable planting and growing of crops in a season when outdoor raising is impossible or to increase productivity of the crops in a season when the productivity is low by artificially controlling a raising atmosphere of the crops to create an atmosphere which is suitable for the crops. Then, it is necessary to set up a production atmosphere by finding relationships of atmospheric conditions (e.g. amount of light, temperature, humidity, concentration of carbon dioxide, amount of water and kind of soil), with growing properties of the crops by taking economical efficiency into account.

Properties required for a covering material which is essential to create an artificial space, namely, a facility vary with objects of its use, applications, and also the kind of crops. For example, main properties required for a covering film which is used as a primary covering material of the green house or tunnel or an insulation curtain used in the house or tunnel include weather resistance (property to stand outdoor use with exposure to sunlight for a long time), anti-stick property ( property for preventing deterioration of transparency which is caused by covering of an inner surface of the film with water droplets formed by condensation because of high humidity in the house or tunnel), heat retaining property (property to maintain a high temperature in the facility at night) and light transmission (transparency).

The film which is used as the covering film or the insulation curtain is secondary processed e.g. by eyeletting, sack-finishing, or joint-processing.

In the secondary processing, the polyvinyl chloride film is often heat sealed by high frequency heating. The high frequency heating utilizes dielectric polarization which is generated when an alternating electric field of high frequency is applied on a material. Since it can generate heat from inside of the material, it can heat the material uniformly. When the high frequency heating is used in the above secondary processing, a product having good appearance is obtained advantageously.

Polyolefin resins, however, have a lower relative dielectric constant and a lower dielectric loss than a plasticized polyvinyl chloride resin, and its suitability to the high frequency heating is poorer than the polyvinyl chloride resin. Therefore, the polyolefin resin film has insufficient processability with the high frequency heating.

With the rise of public opinions on the global environment protection, the polyolefin resin film which can be completely burnt without generating hazardous gas attracts more attention than the polyvinyl chloride film which generates hydrogen chloride gas when its waste material is burnt.

In addition, the polyolefin resin film has superior mechanical properties (e.g. tear strength and cold resistance), weather resistance and heat stability to the polyvinyl chloride film. Then, the covering film to be used in building the green house or tunnel has been switched from the polyvinyl chloride film to the polyolefin resin film. Therefore, it is highly desired to provide a polyolefin resin film having the secondary processability with the high frequency heating which is comparable to that of the polyvinyl chloride film.

An object of the present invention is to provide a polyolefin resin film made of a polyolefin resin which is friendly to the global environment, excellent in various properties required for an agricultural covering material used as a covering film or an insulation curtain in a facility horticultural house or tunnel, and also excellent in secondary processability, in particular, high frequency heat sealability.

According to the present invention, there is provided a laminated polyolefin resin film comprising an inner layer which comprises 88 to 70 wt. % of a polyolefin resin and 12 to 30 wt. % of a double hydroxide having a peak temperature for liberating water of crystallization in a range between 160°C and 300°C and containing at least 5 wt. % of water of crystallization (hereinafter referred to as "Layer A"), and outer layers of a polyolefin resin (hereinafter referred to as "Layer B" and "Layer C") which are laminated on respective surfaces of said inner layer, wherein the content of said double hydroxide is from 8 to 25 wt. % based on the weight of the whole laminate film and wherein the ratio of the thickness of each of the outer layers to that of the inner layer is from 10:100 to 70:100.

The double hydroxide used in the present invention is a hydroxide comprising at least two elements selected from alkali metals, alkaline earth metals, the IIB group elements, the IIIA group elements having atomic numbers equal to or larger than aluminum, the IVA group elements having atomic numbers equal to or larger than that of silicon and transition metals, which contains at least 5 wt. % of water of crystallization, and has a peak temperature for liberating water of crystallization in the range between 160°C and 300°C.

An example of the double hydroxide is a compound of the formula:

Li+(Al³⁺)₂(OH-)₆•(A₁ⁿ⁻)_{1/n}•mH₂O (1)

wherein A₁ⁿ⁻ is a n-valent anion, for example, Cl⁻, Br⁻, I⁻, NO₃⁻, ClO₄⁻, SO₄²⁻, CO₃²⁻, SiO₃²⁻, HPO₄³⁻, HBO³⁻, PO₄³⁻, Fe(CN)₄³⁻, Fe(CN)₄⁴⁻, CH₃COO-, C₆H₄(OH)COO-, (COO)₂²⁻, terephthalate ion or naphthalenesulfonate ion and m is a number of 0 to 3, which is one of lithium aluminum double hydroxides. Its specific examples are MIZUKALAC (manufactured by Mizusawa Chemical Industries, Ltd.) and FUJIRAIN LS (manufactured by Fuji Chemical Industries, Ltd.).

In addition, the above double hydroxides which further contain at least one element selected from alkaline earth elements, Zn and Si (e.g. LMA manufactured by Fuji Chemical Industries, Ltd.) can be exemplified.

Another examples of the double hydroxide is a hydrotalcite type compound of the formula:

M²⁺ ₁₋ₓAlₓ(OH)₂(A₂ⁿ⁻)_{x/n}•kH₂O (2)

wherein M²⁺ is a divalent ion of a metal selected from
magnesium, calcium and zinc, x is a number larger than 0 and smaller than 0.5, k is a number of 0 to 2, and A₂ⁿ⁻ is a n-valent anion, for example, Cl⁻, Br⁻, I⁻, NO₃⁻, ClO₄⁻, SO₄²⁻, CO₃²⁻, SiO₃²⁻, HPO₄³⁻, HBO³⁻, PO₄³⁻, Fe(CN)₄³⁻, Fe(CN)₄⁴⁻, CH₃COO-, C₆H₄(OH)COO-, (COO)₂²⁻, terephthalate ion or naphthalenesulfonate ion.

Its specific examples are natural hydrotalcite (Mg_{0.75}Al_{0.25}(OH)₂(CO₃)_{0.125}•0.5H₂O), synthetic hydrotalcite (trade mane DHT-4A manufactured by Kyowa Chemical Industries, Ltd.; and Mg_{0.69}Al_{0.31}(OH)₂(CO₃)_{0.15}•0.5H₂O).

Among those double hydroxides, one containing 5 wt. % or more of water of crystallization and having a peak temperature for liberating water of crystallization in a range between 160°C and 300°C is suitably used in the present invention.

Herein, "peak temperature for liberating water of crystallization" means the peak temperature in the weight change differential curve when a sample of the double hydroxide is heated at a heating rate of 10°C/min. using a differential thermal analyzer, and the percentage of water of crystallization is measured by a thermobalance method and the Karl-Fischer's method after drying a sample of the double hydroxide at 100°C for 3 hours.

In the present invention, the double hydroxide is used generally in a powder form. In view of the strength and transparency of the film, its average particle size is preferably from 0.05 to 10 µm. The refractive index of the double hydroxide is not limited, but is preferably from 1.47 to 1.55 in view of good transparency of the obtained laminated film.

The amount of double hydroxide in Layer A is from 12 to 30 wt. %, preferably from 14 to 25 wt. %. When the amount of double hydroxide in Layer A is less than 12 wt. %, high frequency heating sealability of the laminated film is deteriorated. When this amount exceeds 30 wt. %, transparency of Layer A is decreased. In the present specification, the amount of the double hydroxide is the weight of the double hydroxide containing the water of crystallization.

The double hydroxide may be compounded in the Layers B and C. In this case, the amount of the double hydroxide in each of the Layers B and C is preferably less than 5 wt. % to suppress the deterioration of the film appearance after high frequency heating sealing.

The total amount of double hydroxide is from 8 to 25 wt. % of the whole weight of the polyolefin resin laminated film comprising Layers A, B and C. When the total amount of double hydroxide is less than 8 wt. %, the obtained polyolefin resin laminated film has a deteriorated high frequency heating sealability, while when it exceeds 25 wt. %, the transparency of the laminated film is decreased or the film is foamed by the high frequency heating sealing, which cause deterioration of the film appearance.

Examples of the polyolefin resin to be used in the Layer A are homopolymers of ethylene or an α-olefin having 3 to 10 carbon atoms (e.g. polyethylene and polypropylene), ethylene-α-olefin copolymers (e.g. ethylene-propylene copolymers, ethylene-butene-1 copolymers, ethylene-4-methyl-1-pentene copolymers, ethylenehexene copolymers and ethylene-octene copolymers), and copolymers comprising ethylene and other monomers having a polar vinyl group (e.g. ethylene-vinyl acetate copolymers, ethylene-acrylic acid copolymers, ethylene-methyl methacrylate copolymers, ethylene-vinyl acetate-methyl methacrylate copolymers and ionomer resins).

Among these resins, polyethylene, in particular, low density polyethylene having a density of 0.93 g/cm³ or less, ethylene-α-olefin copolymers, and ethylene-vinyl acetate copolymers containing 30 wt. % or less of vinyl acetate are preferred, since they are excellent in transparency and flexibility, and can provide an economical laminated film.

Examples of the polyolefin resin to be used in Layers B and C are substantially the same as those exemplified in connection with Layer A.

Kinds of the polyolefin resins used in Layers A, B and C may be the same or different.

Layer A may contain one or more additives such as an anti-sticking agent, a heat stabilizer, a weathering agent, a UV-light absorber, a filler, an anti-fogging agent, a lubricant, and a colorant, as long as the objects of the present invention are not impaired. The additives to be compounded in the polyolefin resin are listed in Tanaka et al., "SEPARATION AND ANALYSIS TECHNOLOGIES OF POLYMER ADDITIVES", Nippon Kagaku Joho Co., Ltd. (1987), Goto et al., "PRACTICAL HANDBOOK OF ADDITIVES FOR PLASTICS AND RUBBERS", Kabushikikaisha Kagaku Kogyo Shuppan (1970), and so on.

An anti-sticking agent is added to the polyolefin resin to prevent a phenomenon that the transparency of the film is worsened by covering of an inner surface of the film with fine droplets formed by condensation, and includes a solid one and a liquid one at ambient temperature (23°C). Examples of the solid anti-sticking agent are sorbitan fatty acid ester surfactants (e.g. sorbitan monostearate, sorbitan monopalmitate and sorbitan monobehenate ) , glycerol fatty acid esters (e.g. glycerol monolaurate, glycerol monopalmitate, glycerol monostearate, diglycerol distearate and triglycerol monostearate), polyethylene glycol base surfactants (e.g. polyethylene glycol monopalmitate and polyethylene glycol monostearate), adducts of alkylphenols with alkylene oxides and esters of organic acids with sorbitan/glycerol condensates.

Examples of the liquid anti-sticking agent are glycerol fatty acid est esters (e.g. glycerol monooleate, diglycerol monooleate, diglycerol sesquioleate, tetraglycerol monooleate, hexaglycerol monooleate, glycerol pentaoleate, diglycerol pentaoleate, tetraglycerol pentaoleate, hexaglycerol pentaoleate, tetraglycerol monolaurate and hexaglycerol monolaurate), and sorbitan fatty acid esters (e.g. sorbitan monooleate, sorbitan dioleate and sorbitan pentaoleate). The amount of the anti-sticking agent is not limited as long as the film properties are not deteriorated. In general, an amount of the anti-sticking agent is from 0.3 to 5 wt. parts, preferably from 0.5 to 3 wt. parts, more preferably from 1 to 2.5 wt. parts based on the whole weight of the film (100 wt. parts).

Examples of the anti-fogging agent are fluorine compounds having a perfluoroalkyl group or ω-hydrofluoroalkyl group,

in particular, fluorine-containing surfactants, and silicon compounds having an alkylsiloxane group, in particular, containing surfactants . The amount of the anti-fogging agent is not limited as long as the film properties are not deteriorated. In general, the amount of the anti-fogging agent is from 0.01 to 4 wt. parts, preferably from 0.02 to 2 wt. parts, more preferably from 0.1 to 1 wt. parts based on the whole weight of the film (100wt. parts).

Examples of the heat stabilizers are hindered phenol compounds (e.g. 2,6-dialkylphenyl derivatives and 2-alkylphenol derivatives), sulfur compounds having a thiol bond or a thioether bond including a divalent sulfur atom and phosphite esters having a trivalent phosphorus atom.

Examples of the weathering agent are hindered amine compounds and nickel compounds. In particular, the hindered amine compounds are preferably used. Specific examples of the hindered amine compound are 2,2,6,6-tetraalkylpiperidine derivatives which preferably have a molecular weight of 250 or more and a substituent at the 4-position. Examples of the substituent at the 4-position are carboxylic acid groups, alkoxy groups and alkylamine groups. The piperidine ring may have an alkyl group on the nitrogen atom.

Examples of the UV-light absorber are hydroxybenzophenone compounds, hydroxybenzotriazole compounds and benzoate compounds.

Examples of the filler are magnesium oxide, calcium oxide, aluminum oxide, silicon oxide, titanium oxide, lithium hydroxide, magnesium hydroxide, calcium hydroxide, aluminum hydroxide, magnesium carbonate, calcium carbonate, potassium sulfate, magnesium sulfate, calcium sulfate, zinc sulfate, aluminum sulfate, lithium phosphate, sodium phosphate, potassium phosphate, calcium phosphate, magnesium silicate, calcium silicate, aluminum silicate, titanium silicate, sodium aluminate, potassium aluminate, calcium aluminate, sodium aluminosilicate, potassium aluminosilicate, calcium aluminosilicate, kaolin, talc and clay.

Layers B and C may contain one or more of the above exemplified additives as long as the objects of the present invention are not impaired.

The kinds of additives in Layers A, B and C may be the same or different.

At least one of Layers B and C of the polyolefin resin laminate film of the present invention may be subjected to dustresistant treatment, anti-sticking treatment and/or anti-fogging treatment.

To impart the anti-sticking property, in addition to the compounding of the above anti-sticking agent, an anti-sticking coating may be formed at least on an inner surface, that is, a surface facing inside of the facility, of the laminated film. The formation of the anti-sticking coating is preferred, since the transparency of the polyolefin resin laminated film of the present invention lasts long time.

Examples of the anti-sticking coating are a coating film of an inorganic oxide sol such as colloidal silica and colloidal alumina disclosed in Japanese Patent Publication Nos. 32668/1974 and 11348/1975, a coating film of a mixture of such inorganic oxide sol and an organic compound (e.g. a surfactant or a resin) disclosed in Japanese Patent Publication Nos. 45432/1988, 45717/1988 and 2158/1989 and Japanese Patent KOKAI Publication No.207643/1991, and a coating film formed from a liquid comprising a surfactant, a film of a hydrophilic resin (e.g. polyvinyl alcohol, polysaccarides or polyacrylic acid).

The anti-sticking coating may be formed by coating, or laminating a separately formed film of the anti-sticking coating on the polypropylene laminate film. The coating method is not critical. Two or more anti-sticking coatings may be formed.

Layer A in the present invention comprises the polyolefin resin and the above described double hydroxide. Layer A may be a single layer or a multiple layer comprising two or more thin layers each comprising the polyolefin resin and the double hydroxide. In case of a multiple layer, the amount of the double hydroxide in Layer A is the total amount of the double hydroxides contained in all the thin layers.

Layers B and C comprise the polyolefin resin as a base material.

A thickness ratio of Layers A, B and C (A:B:C) is preferably 100:(10-70):(10-70). In view of the appearance and in particular transparency of the laminated film, the thickness of each of Layers B and C is at least 15 in relation to the thickness of Layer A of 100. In view of the high frequency heating sealability of the laminated film, each of Layers B and C has preferably a smaller thickness than Layer A. For example, the thickness of each of Layers B and C is 70 or less, in particular 50 or less in relation to the thickness of Layer A of 100. The thicknesses of Layers B and C may be the same or different.

The thickness of the polyolefin resin laminated film of the present invention is usually from 0.02 to 0.3 mm. The thickness is preferably at least 0.03 mm in view of the strength of the laminated film, and preferably 0.2 mm or less, in particular 0.17 mm or less in view of the joint processability and covering workability.

The polyolefin resin laminated film of the present invention may be produced as follows:

The polyolefin resin composition for Layer A is prepared by mixing and kneading the polyolefin resin together with the double hydroxide and the optional additives such as the anti-sticking agent, the heat stabilizer, the weathering agent, using a conventional mixing and kneading apparatus such as a ribbon blender, a super mixer, a Banbury mixer, a single or twin screw extruder. In the similar way, the polyolefin resin composition for Layers B and C is prepared.

The obtained resin compositions are molded in sheet forms so that Layers B and C are laminated on the respective sides of Layer A by a conventional film forming method such as a T-die film molding method by coextrusion, or an inflation film molding method. When each layer comprises two or more thin layers (sublayers), the same molding method may be used. Alternatively, each of Layers A, B and C is formed separately, and then the layers are laminated using an adhesive and so on.

The environment-friendly polyolefin resin laminate film of the present invention is preferably used as an agricultural material such as a covering of a green house or tunnel used in the facility horticulture, since it is excellent in secondary processability such as eyeletting, sack-finishing or joint-processing because its high frequency heating sealability is as good as that of a polyvinyl chloride film. Also, the polyolefin resin laminated film of the present film can be used as a multing film.

### Examples

The present invention will be explained in detail by the following examples which will not limit the scope of the present invention in any way.

The testing methods used in the Examples were as follows:

### High frequency heating sealability test

Using a high frequency welding machine (manufactured by QUEEN LIGHT DENSHI SEIKO Co., Ltd. Sealing length: 200 mm, sealing width: 20 mm, output: 3.6 kW (effective output: about 2 kW), 0.75 A, frequency: 40 MHz. Rubber sheet plate), a pair of the laminated sample sheets was heated by high frequency. The peeling property of the sample was measured by pulling the sheets to measure the shortest heating time at which cohesive failure was observed. A shorter heating time means better high frequency heating sealability.

After sealing, the appearance of the films was observed. One having good appearance was ranked "O", one having blushing was ranked "Δ" and one having bad appearance with irregularities and shrinkage was ranked "X".

### Measurement of peak temperature for liberating water of crystallization

Using a thermobalance (a thermal analysis system SSC 5200/TG/DTA 220 manufactured by Seiko Electric Industries, Ltd.), the peak temperature for liberating water of crystallization of a double hydroxide was measured at a heating rate of 10°C/min. The peak temperature was obtained from a first-order differential value of a TG curve.

### Burning test

A film or a laminate film (10 g) was burnt on a ceramic plate, and odor was smelled. One generating a faint wax-like odor was ranked "O", and one generating a bad odor or an irritating odor was ranked "X".

### Example 1

To an ethylene-vinyl acetate copolymer (Trade name: EVATATE H 2020 manufactured by Sumitomo Chemical Co., Ltd. Vinyl acetate content: 15 wt. %), 16 wt. % of lithium aluminum double hydroxide (Trade name: MIZUKALAC manufactured by Mizusawa Chemical Industries, Ltd.), 0.4 wt. % of a hindered amine compound (a) as a weathering agent (Trade name: TINUVIN 622-LD manufactured by Ciba-Geigy), 0.1 wt. % of an antioxidant (b) (Trade name: IRGANOX 1010 manufactured by Ciba-Geigy), 1.4 wt. % of monoglycerol monostearate and 0.6 wt. % of diglycerol distearate as anti-fogging agents, and 0.2 wt. % of stearic acid amide as a lubricant (each wt. % being based on the whole resin composition) were added and kneaded in a Banbury mixer at 150°C for 5 minutes. Then, the mixture was pelletized by a pelletizer to obtain pellets of the composition. This composition will be referred to as "Resin Composition (1)".

Separately, to an ethylene-vinyl acetate copolymer (Trade name: EVATATE D 2011 manufactured by Sumitomo Chemical Co., Ltd. Vinyl acetate content: 5 wt. %), 0.4 wt. % of the hindered amine compound (a), 0.1 wt. % of the antioxidant (b), 1.4 wt. % of monoglycerol monostearate and 0.6 wt. % of diglycerol distearate, and 0.2 wt. % of stearic acid amide were added and kneaded in a Banbury mixer at 150°C for 5 minutes. Then, the mixture was pelletized by a pelletizer to obtain pellets of the composition. This composition will be referred to as "Resin Composition (2)".

Using Resin Composition (1) as a composition of Layer A and Resin Composition (2) as a composition of Layers B and C, a laminated film comprising Layer A having a thickness of 45 µm, and Layers B and C each having a thickness of 15 µm (total thickness of 75 µm) were prepared by an inflation film molding machine, and subjected to the high frequency heating sealing test and the burning test. The results are shown in the Table. All results were excellent.

### Examples 2 and 3

In the same manner as in Example 1 except that the double hydroxide shown in the Table was used in the Resin Composition (1), a laminated film was produced and subjected to the high frequency heating sealing test and the burning test. The results are shown in the Table. All results were excellent.

### Example 4

In the same manner as in Example 1 except that the double hydroxide shown in the Table and polyethylene (SUMIKATHENE F208-0 manufactured by Sumitomo Chemical Co., Ltd.) as a resin in Resin Composition (1) for Layer A were used, 2 wt. % of lithium aluminum double hydroxide (Trade name: MIZUKALAC manufactured by Mizusawa Chemical Industries, Ltd.) was added to

Resin Composition (2) for Layer B, and 0.1 wt. % of a perfluorooctanesulfonic acid-N-ethylene oxide (10 moles) adduct and 0.1 wt. % of a hydroxybenzophenone type UV light absorber (Trade name: SUMISORB 130 manufactured by Sumitomo Chemical Co., Ltd.) were added to each of the Resin Composition for Layer A and the Resin Compositions for Layers B and C, a laminated film having a thickness ratio (C/A/B) of 1/5.5/1 was produced and subjected to the high frequency heating sealing test and the burning test. The results are shown in the Table. All results were excellent.

### Example 5

In the same manner as in Example 1 except that the double hydroxide shown in the Table was used in Resin Composition (1), an ethylene-butene copolymer (SUMIKASEN L FA 201-0 manufactured by Sumitomo Chemical Co., Ltd.) was used as a resin in Resin Composition (2) for Layer B, 2 wt. % of a hydrotalcite compound (Trade name: DHT 4A manufactured by Kyowa Chemical Industries, Ltd.) was added to Resin Composition (2) for Layer B, and 0.1 wt. % of perfluorooctanesulfonic acid-N-ethylene oxide (10 moles) adduct and 0.1 wt. % of a hydroxybenzophenone type UV light absorber (Trade name: SUMISORB 130 manufactured by Sumitomo Chemical Co., Ltd.) were added to each of Resin Composition (1) and the Resin Compositions for Layers B and C, a laminated film having a thickness ratio (C/A/B) of 1/5.5/1 was produced and subjected to the high frequency heating sealing test and the burning test. The results are shown in the Table. All results were excellent.

### Example 6

In the same manner as in Example 1 except that the double hydroxide shown in the Table was used in Resin Composition (1), a laminated film was produced and subjected to the high frequency heating sealing test and the burning test. The results are shown in the Table. All results were excellent.

### Comparative Examples 1-4

In the same manner as in Example 1 except that the double hydroxide shown in the Table was used in Resin Composition (1), a laminated film was produced and subjected to the high frequency heating sealing test and the burning test. The results are shown in the Table. All the results were bad.

### Comparative Example 6

An agricultural polyvinyl chloride film having a thickness of 75 µm (Trade name: NOBI ACE KIRINAIN manufactured by Mitsubishi Chemical MKV Co., Ltd.) was subjected to the high frequency heating sealing test and the burning test. The results are shown in the Table. This film had a poor waste disposability, that is, it had bad odor when it was burnt.

**Table**

| Ex. No. | Double hydroxide in Layer A (wt. %) | Thickness ratio (B:A:C) | High frequency heating sealing test | | Burning test |
|---|---|---|---|---|---|
| | | | Sealing time (sec.) | Appearance | |
| Ex. 1 | MIZUKALAC (16) | 1/3/1 | 2.5 | O | O |
| Ex. 2 | DHT 4A (16) | 1/3/1 | 2.5 | O | O |
| Ex. 3 | MIZUKALAC (14) | 1/3/1 | 3.5 | O | O |
| Ex. 4 | DHT 4A (20) | 1/5.5/1 | 2.0 | O | O |
| Ex. 5 | DHT 4A (20) | 1/5.5/1 | 2.5 | O | O |
| Ex. 6 | LMA(16) | 1/3/1 | 2.5 | O | O |
| C. E. 1 | None | 1/3/1 | >10 | O | O |
| C. E. 2 | Silica (10) | 1/3/1 | 10 | O | O |
| C. E. 3 | MIZUKALAC (10) | 1/3/1 | 5.0 | O | O |
| C. E. 4 | DHT 4A (10) | 1/3/1 | 5.0 | O | O |
| C. E. 5 | NOBI ACE KIRINAIN | | 3.5 | O | X |

| | | | | | |
|---|---|---|---|---|---|
| Notes: MIZUKALAC: Peak temperature of liberating water of crystallization = 198°C; Water of crystallization = ca. 17 % (manufactured by Mizusawa Chemical Industries, Ltd.). DHT 4A: Peak temperature of liberating water of crystallization = 226°C; Water of crystallization = ca. 13 % (manufactured by Kyowa Chemical Industries, Ltd.). | | | | | |
| LMA: Peak temperature of liberating water of crystallization = 204°C; Water of crystallization = ca. 15 % (manufactured by Fuji Chemical Co., Ltd.). | | | | | |
| Silica: Containing no water of crystallization (Trade name: SNOW MARK SP 10 manufactured by KINSEI MATEC). | | | | | |

## Claims

1. A laminated polyolefin resin film comprising an inner layer which comprises 88 to 70 wt. % of a polyolefin resin and 12 to 30 wt. % of a double hydroxide having a peak temperature for liberating water of crystallization in a range between 160°C and 300°C and containing at least 5 wt. % of water of crystallization, and outer layers of a polyolefin resin which are laminated on respective surfaces of said inner layer, wherein the content of said double hydroxide is from 8 to 25 wt. % based on the weight of the whole laminate film and wherein the ratio of the thickness of each of said outer layers to that of said inner layer is from 10:100 to 70:100.

2. The film according to claim 1, wherein said double hydroxide is a hydrotalcite compound.

3. The film according to claim 1, wherein said double hydroxide is a lithium aluminum double hydroxide.

4. The film according to claim 1, wherein said polyolefin resin is at least one resin selected from polyethylene, ethylene-α-olefin copolymers and ethylene-vinyl acetate copolymers.

5. The film according to claim 1, wherein said polyolefin resin is a low density polyethylene having a density of 0.93 g/cm³ or less.

6. Use of a laminated polyolefin resin film comprising an inner layer which comprises 88 to 70 wt. % of a polyolefin resin and 12 to 30 wt. % of a double hydroxide having a peak temperature for liberating water of crystallization in a range between 160°C and 300°C and containing at least 5 wt. % of water of crystallization, and outer layers of a polyolefin resin which are laminated on respective surfaces of said inner layer, wherein the content of said double hydroxide is from 8 to 25 wt. % based on the weight of the whole laminate film, as a covering of a green house or a tunnel used in facility horticulture.

7. The film according to claim 1, wherein said film has a high frequency heating sealability of from 2.0 seconds to 3.5 seconds in terms of the shortest heating time at which cohesive failure is observed by pulling a sheet which is formed by heating a pair of laminated samples with high frequency using a high frequency welding machine under the following condition:
a sealing length of 200 mm;
a sealing width of 20 mm;
an output of 3.6kW (effective output of about 2 kW) and 0.75 A; and
a frequency of 40 MHz.

8. The film according to claim 1, comprising an anti-stricking agent in each layer of the inner layer and the outer layers in an amount from 2 to 5 parts by weight based on 100 parts by weight of the whole film.

9. A method for improving secondary processability of a laminated film of polyolefin resin, which is **characterized by** comprising a step of laminating, under conditions wherein the content of a double hydroxide is from 8 to 25 wt. % based on the weight of the whole laminate film and wherein the ratio of the thickness of each of the following outer layers to that of the following inner layer is from 10:100 to 70:100, (i) an inner layer which comprises 88 to 70 wt. % of a polyolefin resin and 12 to 30 wt. % of a double hydroxide having a peak temperature for liberating water of crystallization in a rage between 160 °C and 300 °C and containing at least 5 wt. % of water of crystallization, and (ii) outer layers of a polyolefin resin which are laminated on respective surfaces of said inner layer.

10. The method according to Claim 9, wherein the secondary processability is high frequency heating sealability.

11. Use of the film according to Claim 1 for improving secondary processability of a laminated film of polyolefin resin.

12. The use according to Claim 11, wherein the secondary processability is high frequency heating sealability.

## Patentansprüche

1. Laminierte Polyolefinharzfolie, umfassend eine Innenschicht, die 88 bis 70 Gew.-% eines Polyolefinharzes und 12 bis 30 Gew.-% eines Doppelhydroxids umfasst, das eine Peaktemperatur für die Freisetzung von Kristallwasser in einem Bereich zwischen 160°C und 300°C aufweist und mindestens 5 Gew.-% Kristallwasser enthält, und Außenschichten aus einem Polyolefinharz, die auf die jeweiligen Oberflächen der Innenschicht laminiert sind, wobei der Gehalt des Doppelhydroxids 8 bis 25 Gew.-%, bezogen auf das Gewicht der gesamten laminierten Folie, beträgt und das Verhältnis der Dicke jeder Außenschicht zu der der Innenschicht 10:100 bis 70:100 beträgt.

2. Folie nach Anspruch 1, wobei das Doppelhydroxid eine Hydrotalcitverbindung ist.

3. Folie nach Anspruch 1, wobei das Doppelhydroxid ein Lithiumaluminiumdoppelhydroxid ist.

4. Folie nach Anspruch 1, wobei das Polyolefinharz mindestens ein aus Polyethylen, Ethylen-α-Olefin-Copolymeren und Ethylen-Vinylacetat-Copolymeren ausgewähltes Harz ist.

5. Folie nach Anspruch 1, wobei das Polyolefinharz ein Polyethylen geringer Dichte mit einer Dichte von 0,93 g/cm³ oder weniger ist.

6. Verwendung einer laminierten Polyolefinharzfolie, umfassend eine Innenschicht, die 88 bis 70 Gew.-% eines Polyolefinharzes und 12 bis 30 Gew.-% eines Doppelhydroxids umfasst, das eine Peaktemperatur zur Freisetzung von Kristallwasser in einem Bereich zwischen 160°C und 300°C aufweist und mindestens 5 Gew.-% Kristallwasser enthält, und Außenschichten aus Polyolefinharz, die auf den jeweiligen Oberflächen der Innenschicht laminiert sind, wobei der Gehalt des Doppelhydroxids 8 bis 25 Gew.-%, bezogen auf das Gewicht der gesamten laminierten Folie beträgt, als Abdeckung eines Gewächshauses oder eines zum unterstützten Gartenbau verwendeten Tunnels.

7. Folie nach Anspruch 1, wobei die Folie eine Hochfrequenzwärmeschweißbarkeit von 2,0 Sekunden bis 3,5 Sekunden aufweist, ausgedrückt als kürzeste Erwärmungszeit, bei der ein kohäsiver Defekt durch Ziehen einer Platte beobachtet wird, die durch Hochfrequenzerwärmen eines Paars von laminierten Proben unter Verwendung einer Hochfrequenzschweißvorrichtung unter folgenden Bedingungen gebildet wird:
eine Schweißlänge von 200 mm;
eine Schweißbreite von 20 mm;
eine Leistung von 3,6 kW (effektive Leistung etwa 2 kW) und 0,75 A; und
eine Frequenz von 40 MHz.

8. Folie nach Anspruch 1, die ein Antiklebmittel in jeder Schicht der Innenschicht und der Außenschichten in einer Menge von 2 bis 5 Gew.-Teilen, bezogen auf 100 Gew.-Teile der gesamten Folie, umfasst.

9. Verfahren zur Verbesserung der sekundären Verarbeitbarkeit einer laminierten Folie aus Polyolefinharz, **dadurch gekennzeichnet, dass** es einen Schritt des Laminierens, unter Bedingungen, in denen der Gehalt eines Doppelhydroxids 8 bis 25 Gew.-%, bezogen auf das Gewicht der gesamten laminierten Folie, beträgt, und das Verhältnis der Dicke jeder der folgenden Außenschichten zu der der folgenden Innenschicht 10:100 bis 70:100 beträgt, (i) einer Innenschicht, die 88 bis 70 Gew.-% eines Polyolefinharzes und 12 bis 30 Gew.-% eines Doppelhydroxids umfasst, das eine Peaktemperatur zur Freisetzung von Kristallwasser in einem Bereich zwischen 160°C und 300°C aufweist und mindestens 5 Gew.-% Kristallwasser enthält, und (ii) Außenschichten eines Polyolefinharzes, die auf den jeweiligen Oberflächen der Innenschicht laminiert werden, umfasst.

10. Verfahren nach Anspruch 9, wobei die sekundäre Verarbeitbarkeit die Hochfrequenzwärmeschweißbarkeit ist.

11. Verwendung der Folie nach Anspruch 1 zur Verbesserung der sekundären Verarbeitbarkeit einer laminierten Folie aus Polyolefinharz.

12. Verwendung nach Anspruch 11, wobei die sekundäre Verarbeitbarkeit die Hochfrequenzwärmeschweißbarkeit ist.

## Revendications

1. Film de résine de polyoléfine stratifié comprenant une couche interne qui comprend 88 à 70% en poids d'une résine de polyoléfine et 12 à 30% en poids d'un hydroxyde double ayant un pic de température pour libérer l'eau de cristallisation dans une plage entre 160°C et 300°C et contenant au moins 5% en poids d'eau de cristallisation, et des couches externes d'une résine de polyoléfine qui sont stratifiées sur les surfaces respectives de ladite couche interne, dans lequel la quantité dudit hydroxyde double est de 8 à 25% en poids porté au poids du film stratifié total et dans lequel le rapport de l'épaisseur de chacune desdites couches externes à celle de la dite couche interne est de 10 :100 à 70 :100.

2. Film selon la revendication 1, dans lequel ledit hydroxyde double est un composé hydrotalcite.

3. Film selon la revendication 1, dans lequel ledit hydroxyde double est un hydroxyde double de lithium et d'aluminium.

4. Film selon la revendication 1, dans lequel ladite résine de polyoléfine est au moins une résine choisie parmi le polyéthylène, des copolymères d'éthylène et d'α-oléfine et des copolymères d'éthylène et d'acétate de vinyle.

5. Film selon la revendication 1, dans lequel ladite résine de polyoléfine est un polyéthylène basse densité ayant une densité de 0,93 g/cm³ ou moins.

6. Utilisation d'un film stratifié de résine de polyoléfine comprenant une couche interne qui comprend 88 à 70% en poids d'une résine de polyoléfine et 12 à 30% en poids d'un hydroxyde double ayant un pic de température pour libérer l'eau de cristallisation dans une plage entre 160°C et 300°C et contenant au moins 5% en poids d'eau de cristallisation, et des couches externes d'une résine de polyoléfine qui sont stratifiées sur les surfaces respectives de ladite couche interne, la quantité dudit hydroxyde double étant de 8 à 25% en poids rapporté au poids total du film stratifié, comme couverture d'une serre ou d'un tunnel utilisé dans un agencement horticole.

7. Film selon la revendication 1, dans lequel ledit film a une aptitude au scellement par la chaleur à haute fréquence de 2,0 secondes à 3,5 secondes en termes du temps de chauffage le plus court auquel on observe la rupture de cohésion en tirant une feuille qui est formée en chauffant une paire d'échantillons stratifiés par haute fréquence en utilisant une machine à souder à haute fréquence dans les conditions suivantes :
Longueur de scellage de 200 mm ;
Largeur de scellage de 20 mm ;
Sortie de 3,6 kW (sortie efficace d'environ 2 kW) et 0,75 A ; et
Fréquence de 40 MHz.

8. Film selon la revendication 1, comprenant un agent anti-collage dans chaque couche de la couche interne et des couches externes en une quantité de 2 à 5 parties en poids rapporté à 100 parties en poids du film total.

9. Procédé pour améliorer l'aptitude au traitement postérieur d'un film stratifié de résine de polyoléfine, qui est **caractérisé en ce qu'**il comprend une étape de stratification, dans des conditions dans lesquelles la quantité d'un hydroxyde double est de 8 à 25% en poids rapporté au poids du film stratifié total et dans lesquelles le rapport de l'épaisseur de chacune des couches externes suivantes à celle de la couche interne suivante est de 10:100 à 70:100, (i) une couche interne qui comprend 88 à 70% en poids d'une résine de polyoléfine et 12 à 30% en poids d'un hydroxyde double ayant un pic de température pour libérer l'eau de cristallisation dans une plage entre 160°C et 300°C et contenant au moins 5% en poids d'eau de cristallisation, et (ii) des couches externes de résine de polyoléfine qui sont stratifiées sur les surfaces respectives de ladite couche interne.

10. Procédé selon la revendication 9, dans lequel l'aptitude au traitement postérieur est l'aptitude au scellage par la chaleur à haute fréquence.

11. Utilisation du film selon la revendication 1 pour améliorer l'aptitude au traitement postérieur d'un film stratifié de résine de polyoléfine.

12. Utilisation du film selon la revendication 11, dans laquelle l'aptitude au traitement postérieur est l'aptitude au scellage par la chaleur à haute fréquence.
